# EUROPÄISCHE PATENTANMELDUNG

(11) **EP 2 428 385 A2**
(43) Veröffentlichungstag der Anmeldung: **14.03.2012**
(21) Anmeldenummer: 11180820.0
(22) Anmeldetag: 09.09.2011
(51) Int. Cl.: B60K 35/00, B60K 37/06

(54) **Programmierbares Einhandbedienpult mit Steuerprogramm für Fahrzeuge mit Anbaugeräten**

(30) Priorität: 14.09.2010 DE 102010037535
(71) Anmelder: Fiedler Maschinenbau und Technikvertrieb GmbH, 01877 Schmölln-Putzkau (DE)
(72) Erfinder: Fiedler, Frank, 01877 Schmölln-Putzkau (DE); Scholze, Roman, 02977 Hoyerswerda (DE)
(74) Vertreter: Drechsler, Gottfried

(57) **Zusammenfassung**

Die Erfindung betrifft ein programmierbares Einhandbedienpult 1und ein zugehöriges Steuerprogramm für ein Fahrzeug als universeller Geräteträger für unterschiedliche Anbaugeräte insbesondere zur Pflege und zur Reinigung von bewachsenen oder verschmutzten oder glatten Fahrbahnen oder Wegen.

Aufgabe ist es ein Einhandbedienpult 1 mit einem neuartigen universellen Steuerprogramm zu schaffen, wobei möglichst viele Anbaugeräte gesteuert werden sollen und welches konstruktiv einfach aufgebaut ist, sich problemlos bedienen lässt.

Erfindungsgemäß ist das Einhandbedienpult 1 ist an einem drehbeweglichen Standrohr 2 befestigt. Auf dem drehbeweglichen Standrohr 2 ist ein Steuerknüppelgehäuse 3 angeordnet, in dem die Führung für einen Joystick 4 und Elektronik integriert ist. Auf dem Steuerknüppelgehäuse 3 ist der Joystick 4 befestigt und geführt. Am drehbeweglichen Standrohr 2 oder am Steuerknüppelgehäuse 3 ist eine ergonomisch geformte Armstütze 5 angeordnet. Des Weiteren ist ein drehbewegliches Auslegerrohr 6 angeordnet und befestigt. An dessen Ende ist ein Einhandbediengerät 7 in einem Bediengehäuse 8 so befestigt dass es zum einem leicht bedient werden kann und zum anderem sich die Anzeige in der Hauptblickrichtung des Fahrers befindet. Am Einhandbediengerät 7 ist ein Druck-Drehknopf 9 zur Auswahl von Anbaugeräten oder Unterprogrammen auf der Bedienebene 10 angeordnet. Dabei ist ein erstes Tastenfeld 11 direkt um ein Touchscreenfeld 12 und mindestens ein zweites Tastenfeld 13 im Einhandbediengerät 7 angeordnet. Der Vorteil dieser Ausführung besteht darin, dass im Umfeld des Griffbereiches der Hand des Bedieners alle wichtigen denkbaren und erforderlichen Schalt- und Steueraktionen ausgeführt werden können. Das neuartige Steuerprogramm 1 arbeitet unter Nutzung eines Prozessrechners mit integrierten GPS-Empfänger und integrierten Navigationssystem. Es fragt zunächst alle Datenschnittstellen eines oder mehrerer CAN-BUSse des Fahrzeuges automatisch ab. Dabei wird auf diese Art der Typ eines Anbaugerätes oder auch mehrerer verschiedener Anbaugeräte ermittelt. Mit dieser Information ruft das Steuerprogramm aus dem Speicher das jeweils im Speicher hinterlegte jeweils zu einem Anbaugerät gehörige Bedien- und Steuerprogramm automatisch auf, lädt diese hoch und zeigt diese auf dem Bildschirm des Touchscreenfeldes an. Danach wird das Steuerprogramm oder entsprechende mehrere Steuerprogramme entweder manuell oder teilautomatisch oder vollautomatisch abgearbeitet, wobei das oder die Anbaugeräte entsprechend gesteuert werden.

## Beschreibung

Die Erfindung betrifft ein programmierbares Einhandbedienpult (1) mit Steuerprogramm für ein Fahrzeug als universeller Geräteträger für unterschiedliche Anbaugeräte mit integrierten GPS Empfänger und mindestens einem Prozessrechner und stationären oder funkgestützten Datenschnittstellen und einem integrierten Navigationssystem, und ein zugehöriges Steuerungsverfahren zur optimalen Bedienung von Fahrzeugen insbesondere zur Pflege und zur Reinigung von bewachsenen oder verschmutzten oder glatten Fahrbahnen oder Wegen.

Bislang ist es üblich und bekannt, dass Geräteträger für Fahrzeuge für unterschiedliche Anbaugeräte, wie zum Beispiel besonders Streugeräte, Anbauheckenscheren, Wildkrautbürsten, Mähgeräte unterschiedlicher Ausbildung oder anderweitig an Ausleger anbaubare Arbeitsgeräte jeweils individuell unabhängig voneinander von Hand gesteuert werden müssen. Es sind einzelne Insellösungen bekannt, wo einzelne Geräte mit einem teilautomatisierten Steuerprogramm angesteuert und bedient werden können. Es ist auch bekannt mittlerweile Straßenfahrzeuge mit GPS Empfängern auszurüsten und diese per Bildschirm und Sprachausgabe zu navigieren.

Die Qualität und Effektivität solcher maschinengestützten Bearbeitungsgänge mit unterschiedlichen Anbaugeräten ist unter anderem davon abhängig, inwieweit es gelingt, Einstell- und Bedienungsfehler zu vermeiden. Zum anderen können die Anbaugeräte selbst bei fehlerhafter Bedienung Schäden erleiden, die unnötige Reparaturen nach sich ziehen. Deshalb ist es erforderlich die Bediener dieser Fahrzeuge mit verschiedenen angebauten Geräten immer wieder zu schulen um Bedienungsfehler zu vermeiden. Weiterhin ist für solche Fahrzeuge ein oftmaliger Anbau und Abbau der Anbaugeräte unvermeidlich.

Aus der DE 88 16 310 U1 ist ein elektronisches Steuergerät an einem Streufahrzeug für den Straßenverkehr bekannt, welches eine dem Streuteller zugeordnete Streugutfördereinrichtung steuert und mehrere Regelkreise umfasst, in welche gesonderte Leuchtdioden für eine "korrekte" und "inkorrekte" Funktion der Streugutfördereinrichtung eingebunden sind, und zwar jeweils wenigstens in einen Regelkreis mit ansteuerbaren Magnetventilen an der Streugutfördereinrichtung und dem Streuteller, mit einem Gerät zum Messen der Fahrzeugbatteriespannung, mit Tachogeneratoren zum Messen der Fahrgeschwindigkeit und Tachogeneratoren zum Messen der Drehzahl der Förderschnecken für das Streugut. Die Steuerelektronik steuert das Ein- und Ausschalten der Streugutzufuhr bei Start und Stopp des Streufahrzeugs, regelt die Streudichte abhängig von der Fahrzeuggeschwindigkeit des Streufahrzeugs und signalisiert über die Leuchtdioden einen störungsfreien Betrieb und Störungen im Bereich des Steuergerätes, gesondert je Regelkreis. Der Fahrer kann auf diese Weise mit einem Blick überschauen, ob alle Komponenten ordnungsgemäß funktionieren. Allerdings sagt das Informationsfeld des Bedienpultes nichts darüber aus, ob vom Fahrer alle Streuparameter tatsächlich im Sinne eines optimalen Streuergebnisses eingestellt worden sind, beispielsweise, ob die Ausbringmenge an Streustoff, Streubreite oder Zumischung von granuliertem oder flüssigen Taustoff zum Abstumpfstreustoff den Straßen- und Witterungsbedingungen gerecht werden und welche Wege oder Fahrbahnen er tatsächlich auch befahren und gestreut hat.

Gemäß der DE 34 20 694 A1 ist eine elektronische Steuereinrichtung für Streufahrzeug für den Winterdienst vorgesehen, um feste, auftauende oder abstumpfende Streustoffe sowie flüssige Enteisungsmittel unter Verwendung von Streutellern geschwindigkeitsproportional und breitengesteuert auszubringen und zu verteilen. Der Aufbau und die Bedienung und insbesondere die Steuerung dieser Steuereinrichtung sind jedoch nicht näher beschrieben.

Eine andere Steuereinrichtung für Streufahrzeuge gemäß DE 34 27 367 C2 erlaubt ein automatisches Ausbringen von Streustoff unter Beibehaltung einer konstant vorgegebenen Streubreite rechts der Fahrzeugachse das Streubild automatisch in Abhängigkeit von der gewünschten Streubreite links der Fahrzeugachse veränderbar ist. Die Bedienung, die Steuerung durch den Fahrer und die Steuereinrichtung selbst ist nicht näher offenbart.

Des Weiteren ist in der DE 10 2005 012 886 A1 ein Streufahrzeug für den Winterdienst mit einer Steuerung beschrieben, welche eine Dosiereinheit in Abhängigkeit von einer vorgegebenen Streubreite, Streudichte und Fahrgeschwindigkeit steuert. Dabei weist das Streufahrzeug eine den Streu-Vorratsbehälter wiegende Wiegeeinrichtung auf, sowie eine Korrektureinheit, die in Abhängigkeit einer vorgegebenen Streubreite, Streudichte und Fahrgeschwindigkeit ermittelte Roh-sollwerte der Dosiereinrichtung unter Berücksichtigung einer aus zwei Messungen der Wiegeeinrichtung ermittelte Messwertdifferenz korrigiert. Über die Bedienung der Steuereinrichtung und deren Aufbau ist ebenfalls nichts offenbart.

Nach DE 38 12 833 A1 ist zum Ansteuern von mehrspurigen Fahrspuren mit einem Streufahrzeug eine elektronische Einrichtung vorgesehen, die dem Fahrer die Bedienung des Gerätes bei der Wahl verschiedener Fahrspuren erleichtert. Zur Einstellung des Streuvorgangs ist gemäß Ausführungsbeispiel eine aus zwei Reihen mit jeweils drei Tasten bestehende Tastatur vorgesehen. Eine Tastenreihe dient der Einstellung der belegten Fahrspur, und die andere der Einstellung der Streubreite. Ein Monitor ist durch vertikale Trennlinien und eine dazu senkrechte Linie in sechs jeweils paarweise zusammengehörende Felder unterteilt. Je nach zu einer zu erzeugenden Streubildstufe sind gleichzeitig mehrere Tasten zu drücken. Der Monitor zeigt das eingestellte Streuprogramm sinnfällig an. Obwohl der Erfindung die Aufgabe zu Grunde liegt, dem Fahrer die Bedienung der Geräte zu erleichtern und Fehlbedienungen zu vermeiden, kann dies zumindest nicht für weitere notwendige Einstellungen gelten, wie Streudichte oder Streugutmischung. Auch nehmen mehrere Tastenreihen entsprechend viel Raum ein, insbesondere für feinstufigere Einstellung, womit das Bediengerät unliebsam unübersichtlich und groß wird. Für unterschiedliche Anbaugeräte ist diese technische Lösung nicht geeignet, da sie sich nur auf eine bestimmte Streueinrichtung bezieht. Bereits der Anbau einer anderen Streueinrichtung bedingt ein anderes Steuergerät.

Im Firmenprospekt "Flachsilostreuaufbau FSS 1100 - Die innovative Lösung für den Winterdienst" des Anmelders, Druckerei Missbach 01/08 sind unter dem Punkt Optionen verschiedene Steuergeräte dargestellt, so eine Fernbedienung für das Fahrerhaus für die Streubreiten- und Streumengenverstellung mit halbautomatischer Steuerung, eine vollautomatische analoge Steuerung mit vollautomatischer, geschwindigkeitsabhängiger Regelung der Streumenge, Einstellung der Streumenge und Streubreite und elektronischer Streukontrolle am Geber und eine vollautomatische digitale Steuerung für eine vollautomatische, geschwindigkeitsabhängige Regelung der Streumenge, einem digitalen Bedienpult zur Streubreiten- und Streumengeneinstellung mit elektronischer Streukontrolle am Streuteller, programmierbarer Bedienkonsole, elektronischer Signalauswertung der Drehzahlen der Antriebsmotoren von Förderschnecke und Streuteller. Die Steuergeräte besitzen jeweils mehrere Drehschalter und Kipp- bzw. Druckschalter sowie Leuchtdioden verschiedener Farben. Das digitale Gerät weist zusätzlich einen kleinen Monitor auf. Abgesehen von der Größe der Steuergeräte, die außer dem Bedienpult auch die elektronische Steuerung enthalten, ist die Bedienung recht unübersichtlich und wenig selbsterklärend.

Durch den Firmenprospekt FA. Giletta Elektronik - GPS" (Ausgabe Mai 2002), insbesondere Seite 2 "BedienpultECOSAT C15", ist ein Bedienpult für ein Streufahrzeug mit einer darin integrierten Bedien- und Anzeigeeinheit für auswählbare Streuprogramme bekannt geworden. Das Bedienpult ist nach dem System "Ein Knopf- eine Funktion" aufgebaut. Dieses Bedienpult ist wieder nur für ein bestimmtes Anbaugerät und zwar nur für ein Streugerät geeignet.

Aus DE 38 36 555 A1 ist bereits eine Multifunktions-Bedieneinrichtung für auswählbare Programme in Kraftfahrzeugen bekannt, wobei die Bedieneinheit ein druck- und drehbetätigbares Einknopf-Bedienelement zur Programmauswahl aufweist und die Anzeigeeinheit einen Bildschirm mit selbsterklärenden Piktogrammen auf mindestens zwei über die Druckbetätigungsfunktion des Bedienelementes auswählbaren Bedienebenen besitzt. Die den Piktogrammen unterlegten Programme einer Bedienebene sind über die Drehbetätigungsfunktion des Bedienelementes auswählbar und mittels der Druckbetätigungsfunktion des Bedienelementes aufrufbar, wobei sich zu einem aufgerufenen Programm ein entsprechendes Untermenü öffnet, anhand dessen mittels einer erneuten Drehbetätigung des Bedienelementes eine Einstellung innerhalb des ausgewählten Programms anhand eines optisch sinnfällig verändernden Piktogramms und/oder sich optisch verändernden Zahlenwertes im Untermenü getroffen werden kann, und wobei bei einer erneuten Druckbetätigung des Bedienelementes ein entsprechender Steuerbefehl, bezogen auf die ausgewählte Programmeinstellung, an eine zentrale elektronische Steuereinheit erfolgt. Die Bedieneinrichtung ist für ein Navigationssystem, eine Heiz-/Klimasteuerung, ein Autotelefon, ein Autoradio, einen Fernseher, einen Bordcomputer oder eine sonstige Einrichtung für verschiedene Bedien-, Anzeige- oder Wiedergabefunktionen vorgesehen.

In der DE 10 2008 047 253 A1 ist eine Einstell- und Bedienungshilfe beschrieben, die es ermöglicht, einfach und fehlerfrei anhand nur eines einzigen Bedienelementes unter Beobachtung selbsterklärenden Darstellungen auf einem Bildschirm die am besten geeignete von vielen aufgabenprogrammierten Betriebsarten auszuwählen und zu starten. Das Bedienpult ist durch die Einelementbedienung zwar klein und übersichtlich und nimmt insbesondere, da das Steuerteil getrennt im Fahrzeug untergebracht ist, wenig Raum ein, hat aber den Nachteil, das der Bediener seine Aufmerksamkeit einmal dem Steuergerät und andermal dem Bedienpult widmen muss. Zusätzlich muss der Fahrer auch noch die Arbeitsweise des Anbaugerätes überwachen wodurch eine effektive zentrale Bedienung und Steuerung einen ständigen Blickwechsel erforderlich macht.

Der Erfindung liegt die Aufgabe zu Grunde ein universelles programmierbares Einhandbedienpult (1) mit einem neuartigen Steuerprogramm für ein Fahrzeug zu schaffen, dass als universeller Geräteträger für mehrere unterschiedliche Anbaugeräte geeignet ist, wobei möglichst viele Anbaugeräte mit dem Einhandbedienpult gesteuert werden sollen und das Einhandbedienpult konstruktiv einfach aufgebaut, sich problemlos bedienen lässt, an beliebigen Stellen im Griffbereich und in Abhängigkeit von der bevorzugten Blickrichtung des Bedieners optimiert angeordnet werden kann und wobei das zugehörige Steuerprogramm sowohl unterschiedliche Anbaugeräte steuern kann als auch unterschiedliche Überwachungsfunktionen erfüllen kann und zusätzlich noch weitere Regelgrößen aufgeschaltet werden können.

Erfindungsgemäß wird die Aufgabe mit den Merkmalen des ersten, fünften und sechsten Patentanspruches gelöst. Weitere zweckmäßige Ausgestaltungen der Erfindung sind Gegenstand der Unteransprüche. Das neuartige programmierbare Einhandbedienpult 1 mit Steuerprogramm für ein Fahrzeug als universeller Geräteträger für unterschiedliche Anbaugeräte ist mit mindestens einem Prozessrechner und/oder integrierten oder extern angeschlossenen GPS-Empfänger und stationären oder funkgestützten Datenschnittstellen und/oder einem integrierten oder angeschlossenem Navigationssystem ausgerüstet. Das Einhandbedienpult 1 ist an einem drehbeweglichen Standrohr 2 befestigt, welches an beliebiger Stelle in der Fahrerkabine des Fahrzeuges befestigt werden kann. Dadurch ist es möglich, je nach dem ob der Fahrer Linkshänder oder Rechtshänder ist, das Einhandbedienpult 1 individuell anzuordnen oder sehr schnell von einer an eine andere Stelle umzurüsten. Auf dem drehbeweglichen Standrohr 2 ist ein Steuerknüppelgehäuse 3 angeordnet, in dem die Führung für einen Joystick 4 und Elektronik integriert ist. Auf dem Steuerknüppelgehäuse 3 ist der Joystick 4 befestigt und geführt. Am drehbeweglichen Standrohr 2 oder am Steuerknüppelgehäuse 3 ist eine ergonomisch geformte Armstütze 5 angeordnet, so dass diese sowohl als Armstütze als auch als Armführung dient. Am Steuerknüppelgehäuse 3 ist des Weiteren ein drehbewegliches Auslegerrohr 6 angeordnet und befestigt. An dessen Ende ist ein Einhandbediengerät 7 in einem Bediengehäuse 8 so befestigt dass es zum einem leicht bedient werden kann und zum anderem sich die Anzeige in der Hauptblickrichtung des Fahrers befindet.

Durch das erfindungsgemäße Einhandbedienpult 1 können erstmals Frontausleger in Verbindung mit beispielsweise einer Wildkrautbürste, oder einer Anbauheckenschere, oder ein Gießarm zur zielgenauen Bewässerung, oder auch ein Flachsilostreuaufbau einschließlich eines geeigneten Anhängerstreuers oder eines Walzenstreuers, oder ein Räumschild, oder eine Kehrmaschine einschließlich der zugehörigen Auflagedrücke zur Be-und Entlastung oder weiterer möglicher Anbaugeräte mittels einer Hand bedient, gesteuert und überwacht werden. Der Bediener kann dabei jederzeit in den jeweils gerade laufenden automatisiert ablaufenden Arbeitsprozess eingreifen oder auch gegebenenfalls eine völlig individuelle Bedienung des oder der jeweils sich gerade im Eingriff befindlichen Anbaugeräte durchführen.

In einer bevorzugten Ausführung des programmierbaren Einhandbedienpultes ist am Einhandbediengerät 7 mindestens ein Druck-Drehknopf 9 zur Auswahl von Anbaugeräten oder Unterprogrammen auf der Bedienebene 10 des Einhandbediengerätes 7 angeordnet. Dabei ist ein erstes Tastenfeld 11 direkt um ein Touchscreenfeld 12 und mindestens ein zweites Tastenfeld 13 im Einhandbediengerät 7 angeordnet. Es ist aber auch möglich allein ein reines Touchscreenfeld 12 zur Einhandbedienung vorzusehen und anzuschließen. Solche Touchscreenfelder sind allerdings zur Zeit kostenintensiver und müssen in der Regel größer dimensioniert werden um alle notwendigen Funktionen bedienbar anzuzeigen und auch unter schwierigen Bedingungen (z. B. Dunkelheit) optimal bedienbar zu sein. Der Vorteil dieser Ausführung besteht darin, dass im Umfeld des Griffbereiches der Hand des Bedieners alle wichtigen denkbaren und erforderlichen Schalt- und Steueraktionen ausgeführt werden können.

Des Weiteren ist es möglich am programmierbaren Einhandbedienpult 1 zum Beispiel am Steuerknüppelgehäuse 3 oder gegebenenfalls am Bediengehäuse 8 ein gesondertes Modul zur direkten Lastschaltung 14 von Hydraulikgeräten und/oder Elektroaggregaten in Griffweite schaltbar anzuordnen. Das geht soweit, dass zum Beispiel wahlweise auch die Gänge des Fahrzeuges selbst von Hand aus schaltbar ausbildbar sind, und damit im direkten Kontrollbereich des Bedieners liegen.

Vorteilhaft ist es, wenn die Armstütze 5 des programmierbares Einhandbedienpults 1 zwei oder mehrteilig ausgeführt ist und zusätzlich in sich beweglich ausgebildet ist. Dadurch ist eine individuelle Anpassung und Einstellung der Armstütze 5 an die anatomischen Bedingungen und Maße des jeweiligen Bedieners möglich.

Beim neuartigen Steuerprogramm für ein Fahrzeug als universeller Geräteträger für unterschiedliche Anbaugeräte und Bedienung über ein Einhandbediengerät 1 unter Nutzung eines Prozessrechners mit integrierten GPS-Empfänger und integrierten Navigationssystem oder entsprechend angeschlossenen Geräten fragt das Steuerprogramm zunächst alle stationären oder funkgestützten Datenschnittstellen eines oder mehrerer CAN-BUSse des Fahrzeuges automatisch ab. Dabei wird auf diese Art der Typ eines Anbaugerätes oder auch mehrerer verschiedener Anbaugeräte ermittelt. Mit dieser Information ruft das Steuerprogramm aus dem Speicher das jeweils im Speicher hinterlegte jeweils zu einem Anbaugerät gehörige Bedien- und Steuerprogramm automatisch auf, lädt diese hoch und zeigt diese auf dem Bildschirm des Touchscreenfeldes an. Danach wird das Steuerprogramm oder entsprechende mehrere Steuerprogramme entweder manuell oder teilautomatisch oder vollautomatisch abgearbeitet, wobei das oder die Anbaugeräte entsprechend gesteuert werden. Die manuell betätigbare Bedienebene und die Fahrzeugsteuerung ist hierbei jedoch als Vorrangsteuerung geschaltet, damit der Fahrer bzw. Bediener jederzeit in Echtzeit eingreifen kann..

Das neuartige Steuerprogramm für ein Fahrzeug als universeller Geräteträger für unterschiedliche Anbaugeräte und Bedienung über ein Einhandbediengerät mit wahlweise integrierten oder angeschlossenen GPS Empfänger ist mit verschiedenen Geräten verbunden und verschalten. Insbesondere sind dies mindestens ein Prozessrechner und stationäre oder funkgestützte Datenschnittstellen und ein integrierten oder angeschlossenem Navigationssystem oder entsprechend angeschlossener Geräte und zusätzliche Einrichtungen zur Ermittlung, Speicherung und ansteuerbaren Änderung der Fahrtrichtung, der Fahrgeschwindigkeit, der Betätigung und der Stellung der angekoppelten Last oder eines oder mehrerer angekoppelter Anbaugeräte, und/oder ein Ultraschallüberwachungsgerät, ein Radarüberwachungsgerät, ein Bilderfassungsgerät, ein Laserüberwachungsgerät und/oder weitere Sensoren zur Erfassung und Erkennung von festen und oder beweglichen Hindernissen, wobei der Bordcomputer mit Wechseldatenträger und Funkschnittstelle und Betätigung über eine Bedienebene 10 und einem Touchscreenfeld 12 und/oder einem Tempomat verbunden ist. Mit Hilfe dieser Gerätetechnik kann die Fahrstrecke und die Fahrweise auf öffentlichen, oder nicht öffentlichen Wegen, Straßen, Plätzen und Flächen aufgezeichnet und gespeichert werden. Bevorzugt werden dabei alle Daten zur Fahrstrecke, Fahrweise und Arbeitsweise des Fahrzeuges einschließlich des oder der angekoppelten Anbaugeräte zeit- und/oder weg-und/oder positions- und/oder ereignisrelevant aufsummiert und gespeichert. Zusätzlich werden sich wiederholende oder vorgegebene Fahrmanagements automatisch erkannt und/oder bei Bedarf angezeigt und können bei Bedarf auch wiederholbar ausgeführt werden. Dabei sind die Funktionen des Fahrmanagements vom Bediener gesamt oder in Fahrblöcken und/oder in getakteten Einzelschritten automatisch, oder auch teilautomatisiert oder rein manuell schaltbar, wobei einzelne Positionen oder Fahrblöcke des Fahrmanagements bei Bedarf auch ausgeblendet, d. h. übersprungen werden können. Das Fahrmanagement kann bei Hindernissen automatisch deaktiviert werden und es kann ebenfalls auch die Aufmerksamkeit des Bedieners überwacht werden. Das Fahrzeug bleibt dabei automatisch stehen, wenn der Bediener nicht auf Überwachungssignale reagiert. Der Vorteil liegt vor allem darin, dass zum Beispiel bei Saisonende problemlos verschiedenste Daten je nach Wunsch ausgewählt werden können und einer Effektivitätsprüfung oder Verbrauchsprüfung unterzogen werden können und eine Optimierung der Fahrmanagements nach verschiedensten frei wählbaren Kriterien erfolgen kann

Bevorzugt ist das Steuerprogramm für ein Fahrzeug des Weiteren so ausgebildet, dass das Fahrmanagement in einem fahrzeugunabhängigen Servercomputer auch gesondert programmiert werden kann. Dabei erfolgt auf diesem Computer eine Simulation und das Ergebnis der Simulation kann in das Steuerprogramm einfließen und eingearbeitete werden. Dann wird dieses Programm zum Fahrmanagement in den Bordcomputer des Fahrzeuges eingegeben und es erfolgt ein Abgleich der Daten der programmierten Version mit den aktuellen Daten während der ersten und/oder der folgenden Fahrstrecke und Wendemanöver. Die Daten werden hierbei erforderlichenfalls korrigiert und die Abweichungen und Änderungen werden angezeigt wobei die geänderten aktualisierten Daten über die Funkschnittstelle in den fahrzeugunabhängigen Servercomputer erneut eingegeben werden und dabei die Simulation ebenfalls erneut erfolgt. Dabei wird mittels ständigem Datenaustausch das Fahrmanagement das Fahrzeug und des oder der Anbaugeräte automatisch optimiert und kann besser als vorher gesteuert werden.

Es ist auch möglich, dass das Steuerprogramm im Rahmen des Fahrmanagements auf dem Fahrzeug weitere Daten sammelt und Anbaugeräte überwacht, diese Daten im Bordcomputer oder im Servercomputer speichert und auch so auswertet und zur Verfügung stellt, so dass eine Fernwartung oder eine Fernüberwachung eines oder mehrerer Anbaugeräte oder des gesamten Fahrzeuges einschließlich seiner Fahrstrecke und seines aktuellen Aufenthaltsortes auf Einzelabfrage oder automatisch erfolgen kann.

Das neuartige Steuerprogramm für ein Fahrzeug kann auch so weiterqualifiziert werden, dass über das Steuerprogramm und eine entsprechend zugehörige Hardware wie zum Beispiel einer Kommunikationsschnittstelle mit dem Fahrzeug eine interaktive Kommunikation über funkgestützte Daten- oder Kommunikationsnetze durchgeführt werden kann.

Durch das erfindungsgemäße Einhandbedienpult in Verbindung mit den vorstehend beschriebenen Möglichkeiten der unterschiedlichen Ausbildung der Quantität und Qualität der Steuerprogramme wird erstmals in diesem Bereich die Möglichkeit geschaffen, ein oder auch gleichzeitig mehrere Anbaugeräte eines Fahrzeuges sowohl mittels einer Hand manuell, teilautomatisiert oder vollautomatisch zu bedienen, zu steuern und gleichzeitig auch universell zu überwachen. Des weiteren besteht die Chance aus der Vielzahl von erstmals auch zeit- und ortsbezogen aufgezeichneten Daten individuell verschiedenste statistische Aussagen zu gewinnen um zum Beispiel Fahrstrecken, den Energieverbruch oder die auszuführenden Arbeitsprozesse zu optimieren, um letztlich Kosten zu sparen und um möglichst umweltverträglich arbeiten zu können. Gleichzeitig kann eine ständige Fernüberwachung der Geräte eine zeitnahe Störungssuche und ständige optimale Wartung realisiert werden, was die Nutzungsdauer der Fahrzeuge und Anbaugeräte vergrößert. Große Zeiteinsparungen werden vor allem beim oftmaligen Wechsel der verschiedenen Anbaugeräte an ein Fahrzeug erreicht.

Die Erfindung soll nachstehend in einem Ausführungsbeispiel näher erläutert werden.

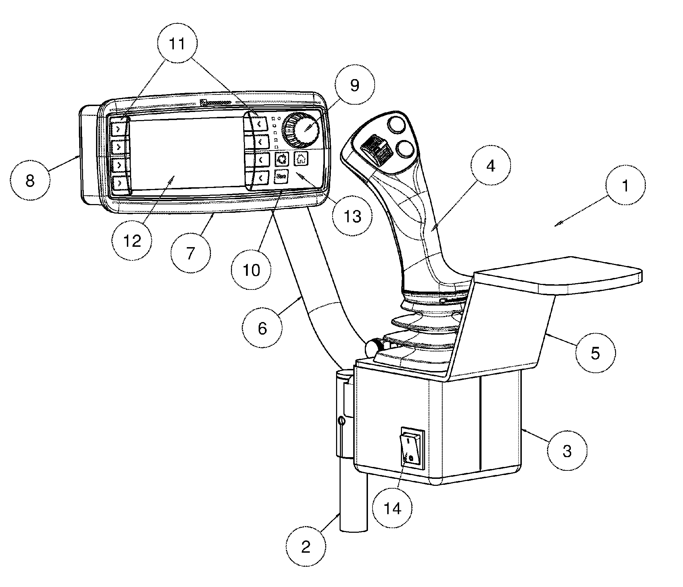

- Figur 1 zeigt: eine räumliche Abbildung einer möglichen einfachen Ausführungsvariante eines erfindungsgemäßen Einhandbedienpults 1 für ein Fahrzeug, welches als universeller Geräteträger für unterschiedliche Anbaugeräte, hier speziell für ein angeschlossenes Flachsilostreugerät, geeignet ist

An einem drehbeweglichen Standrohr 2 ist das Steuerknüppelgehäuse 3 angeordnet. Das drehbewegliche Standrohr 2 kann an beliebiger Stelle im Bedienbereich des Fahrzeuges befestigt sein. In der Regel ist es mit einem Schnellverschlusssystem befestigt, so dass es problemlos und schnell gelöst, justiert und wieder befestigt werden kann. Grundsätzlich ist es auch denkbar, dass das Standrohr 2 mit einem, zwei oder mehreren verstellbaren und arretierbaren Gelenken versehen ist, um die Verstellbarkeit in der Fahrerkabine des Fahrzeuges zu verbessern. Im Steuerknüppelgehäuse 3 ist ein Modul zur Lastschaltung 14 integriert. Hier im konkreten Anwendungsfall, bei einem Fahrzeug an welches ein Streugerät angebaut und angekoppelt ist, ist als Lastschalter 14 ein Schalter zum Zuschalten der Hydraulik für die Streugutausbringung angeordnet. Direkt auf dem Steuerknüppelgehäuse 3 ist eine Armstütze 5 befestigt, wo der Fahrer seinen Unterarm abstützen kann. Auf dem Steuerknüppelgehäuse 3 ist der Joystick 4 befestigt, mittels dem die Funktion und Steuerung insbesondere eines aktiven Gerätes, wie zum Beispiel eines Räumschildes in Verbindung mit einem Streugerät während des Wintereinsatzes des Fahrzeuges gewährleistet werden kann. Gleichfalls könnte hier auch ein Sprühkopf gesteuert werden, der an bestimmten Stellen, wo der zu räumende Gehweg oder die Straße vereist ist, eine Lauge oder Streusalz ausbringt.

Am Steuerknüppelgehäuse 3 ist des Weiteren das Auslegerrohr 6 befestigt. Auch dieses Auslegerrohr ist drehbar und in seiner Auslage einstellbar ausgeführt, so dass die Bedienebene 10 des Einhandbediengerätes 7 optimal auf die anatomischen Maße des jeweiligen Bedieners ausgerichtet und eingestellt werden kann. Am anderen Ende des Auslegerrohrs 6 ist das Bediengehäuse 8 des Einhandbediengerätes 7 angeordnet. Die Bedienebene 10 ist hier nahezu flächig ausgelegt, kann aber auch gewölbt ausgeführt sein. In die flächige Bedienebene 10 ist ein flaches Touchscreenfeld 12 integriert, auf dem eine menügeführte Steuerung von einzeln, angezeigten Programmschritten des jeweils gerade ausgeführten Steuerprogramms angezeigt wird. Hier können aber auch andere Daten, welche z. B. das gerade ausgeführte Fahrmanagement betreffen oder das vom Prozessrechner empfohlene optimierte Fahrmanagement, angezeigt werden. Vorteilhafterweise ist links und rechts des Touchscreenfeldes 12 noch ein erstes Tastenfeld 11 angeordnet. Das hat den Vorteil, dass gegebenenfalls der Bediener wahlweise entweder eine Aktion durch direktes Berühren eines auf dem Touchscreenfeld 12 aufleuchtenden Piktogramms oder durch Drücken, der sich daneben befindenden Taste des ersten Tastenfeldes 11 auslöst. Dies kann zum Beispiel erforderlich werden, wenn die Hände des Bedieners verschmutzt sind und eine alleinige Bedienung nur über das Touchscreenfeld 12 dieses sehr schnell zerkratzen würde. Es ist aber auch möglich, dieses Tastenfeld 11 mit über das Steuerprogramm bereitgestellten Unterprogrammen, oder einzelnen Unterprogrammschritten zu einzelnen möglichen Anbaugerätetypen zu hinterlegen, die dann sofort aufrufbar sind. Im vorliegenden Ausführungsfall ist rechts neben der rechten Tastenleiste ein Druck-Drehknopf 9 angeordnet. Dieser dient insbesondere zum Beispiel als ein multifunktionaler Schalter für eine Auswahl eines konkreten Anbaugerätes oder einer konkreten Aktion und zu deren Start durch Drücken dieses Druck-Drehknopfes 9. Dies hat den Vorteil, das z. B. bei aktivem Fahrbetrieb eine Fehlbedienung weitgehend ausgeschlossen werden kann, weil die Finger während einer Rüttelbewegung des Fahrzeuges nicht aus Versehen verrutschen können und eine falsche oder ungewollte Aktion ausgelöst werden kann, was bei einer Bedienung nur über ein Touchscreenfeld 12 durchaus passieren könnte. Unter dem Druck-Drehknopf 9 ist noch ein zweites Tastenfeld 13 (hier im konkreten Fall mit drei Tasten ausgeführt) angeordnet. Hier können weitere Funktionen oder Aktionen, wie z. B. ein Rücksetzen eines Arbeitsschrittes, ein Steuerprogrammneustart und das versetzen in die voreingestellte Ausgangsprogrammierung hinterlegt sein. Die einzelnen Funktionen können in einfacher Art und Weise durch Änderungen der Programmierung hier optimal variiert werden, so dass je nach Einsatzzweck und Kundenwunsch das Einhandbediengerät 10 entsprechend angepasst werden kann. Gleichfalls ist es möglich, das Einhandbediengerät 10 um 180 Grad auf dem Auslegerrohr 6 zu drehen, womit es dann problemlos auch auf der linken Seite angeordnet werden kann, wodurch die Bedienung auch für Linkshänder besser geeignet ist.

Die Erfindung ist einsetzbar für Fahrzeuge, die in der Landschaftspflege zum Beispiel zur mechanisierten oder automatisierten Reinigung von verschmutzten und oder bewachsenen Fahrbahnen, zum Rasen- oder Heckenschneiden, zum Gießen von Pflanz- oder Baumanlagen, zum Waschen von Wege- oder Straßenbegrenzungen, zur Schneeberäumung und zum Streuen und/oder Sprühen von Fahrbahnen eingesetzt werden.

### Bezugszeichenliste

- 1: Einhandbedienpult
- 2: drehbewegliches Standrohr
- 3: Steuerknüppelgehäuse
- 4: Joystick
- 5: Armstütze
- 6: Auslegerrohr
- 7: Einhandbediengerät
- 8: Bediengehäuse
- 9: Druck-Drehknopf 10 Bedienebene
- 11: erstes Tastenfeld
- 12: Touchscreenfeld
- 13: zweites Tastenfeld
- 14: Modul zur Lastschaltung

## Patentansprüche

1. Programmierbares Einhandbedienpult (1) mit Steuerprogramm für ein Fahrzeug als universeller Geräteträger für unterschiedliche Anbaugeräte
mit mindestens einem Prozessrechner und/oder integrierten oder extern angeschlossenen GPS-Empfänger und/oder
stationären oder funkgestützten Datenschnittstellen und/oder einem integrierten oder angeschlossenen Navigationssystem,
**dadurch gekennzeichnet,**
**dass** das Einhandbedienpult (1) an einem drehbeweglichen Standrohr (2) befestigt ist,
auf dem drehbeweglichen Standrohr (2) ein Steuerknüppelgehäuse (3) angeordnet ist,
auf dem Steuerknüppelgehäuse (3) ein Joystick (4) befestigt ist,
wobei am drehbeweglichen Standrohr (2) oder am Steuerknüppelgehäuse (3) eine ergonomisch geformte Armstütze (5) angeordnet ist,
am Steuerknüppelgehäuse (3) ein drehbewegliches Auslegerrohr (6) angeordnet ist,
an dessen Ende ein Einhandbediengerät (7) in einem Bediengehäuse (8) angeordnet ist.

2. Einhandbediengerät (6) nach Anspruch 1,
**dadurch gekennzeichnet**,
das mindestens ein Druck-Drehknopf (9) zur Auswahl von Anbaugeräten oder Unterprogrammen auf der Bedienebene (10) des Einhandbediengerätes (7) angeordnet ist, ein erstes Tastenfeld (11) direkt um ein Touchscreenfeld (12) angeordnet ist und mindestens ein zweites Tastenfeld (13) angeordnet ist
oder ein reines Touchscreenfeld (12) angeschlossen ist.

3. Programmierbares Einhandbedienpult (1) nach Anspruch 1,
**dadurch gekennzeichnet,**
**dass** am Steuerknüppelgehäuse (3) oder am Bediengehäuse (8) ein Modul zur Lastschaltung (14) von Hydraulikgeräten und/oder Elektroaggregaten in Griffweite schaltbar angeordnet ist.

4. Programmierbares Einhandbedienpult (1) nach Anspruch 1,
**dadurch gekennzeichnet,**
**dass** die Armstütze (5) zwei oder mehrteilig ausgeführt ist und in sich beweglich ausgebildet ist.

5. Steuerprogramm für ein Fahrzeug als universeller Geräteträger für unterschiedliche Anbaugeräte und Bedienung über ein Einhandbediengerät (1) unter Nutzung eines Prozessrechners mit integrierten oder angeschlossenem GPS-Empfänger und/oder einem integrierten oder angeschlossenem Navigationssystem,
**dadurch gekennzeichnet,**
**dass** das Steuerprogramm alle stationären oder funkgestützten Datenschnittstellen eines oder mehrerer CAN-BUSse des Fahrzeuges automatisch abfragt,
der Typ eines Anbaugerätes oder auch mehrerer verschiedener Anbaugeräte ermittelt wird, das Steuerprogramm das jeweils im Speicher hinterlegte jeweils zu einem Anbaugerät gehörige Bedien- und Steuerprogramm automatisch hochlädt und anzeigt,
das Steuerprogramm oder mehrere Steuerprogramme entweder manuell oder teilautomatisch oder vollautomatisch abgearbeitet werden und dabei das oder die Anbaugeräte steuert,
wobei die manuell betätigbare Bedienebene und die Fahrzeugsteuerung als Vorrangsteuerung geschaltet ist.

6. Steuerprogramm für ein Fahrzeug als universeller Geräteträger für unterschiedliche Anbaugeräte und Bedienung über ein Einhandbediengerät mit integrierten GPS Empfänger und mindestens einem Prozessrechner
und stationären oder funkgestützten Datenschnittstellen
und einem integrierten Navigationssystem und
mit Einrichtungen zur Ermittlung, Speicherung und ansteuerbaren Änderung der Fahrtrichtung, der Fahrgeschwindigkeit, der Betätigung und der Stellung der angekoppelten Last oder eines oder mehrerer angekoppelter Anbaugeräte,
und/oder einem Ultraschallüberwachungsgerät, einem Radarüberwachungsgerät, einem Bilderfassungsgerät, einem Laserüberwachungsgerät und/oder Sensoren zur Erfassung und Erkennung von festen und oder beweglichen Hindernissen, einem Bordcomputer mit Wechseldatenträger und Funkschnittstelle und Betätigung über eine Bedienebene (10) und einem Touchscreenfeld (12) und/oder einem Tempomat,
wobei die Fahrstrecke und der Fahrweise auf öffentlichen, oder nicht öffentlichen Wegen, Straßen, Plätzen und Flächen aufgezeichnet und gespeichert wird,
**dadurch gekennzeichnet,**
a) **dass** alle Daten zur Fahrstrecke, Fahrweise und Arbeitsweise des Fahrzeuges einschließlich des oder der angekoppelten Anbaugeräte zeit-und/oder weg- und/oder positions- und/oder ereignisrelevant aufsummiert und gespeichert werden,
b) **dass** sich wiederholende oder vorgegebene Fahrmanagements automatisch erkannt und/oder bei Bedarf angezeigt und wiederholbar ausgeführt werden,
c) **dass** die Funktionen des Fahrmanagements vom Bediener gesamt oder in Fahrblöcken und/oder in getakteten Einzelschritten schaltbar sind, wobei einzelne Positionen oder Fahrblöcke des Fahrmanagements bei Bedarf ausgeblendet werden können,
d) **dass** das Fahrmanagement bei Hindernissen automatisch deaktiviert wird, wobei die Aufmerksamkeit des Bedieners überwacht wird und das Fahrzeug automatisch stehen bleibt, wenn der Bediener nicht reagiert.

7. Steuerprogramm für ein Fahrzeug, nach Anspruch 5,
**dadurch gekennzeichnet,**
a) **dass** das Fahrmanagement in einem fahrzeugunabhängigen Servercomputer gesondert programmiert wird,
b) auf diesem Computer eine Simulation erfolgt, das Ergebnis der Simulation in das Steuerprogramm einfließt und dieses Programm zum Fahrmanagement in den Bordcomputer des Fahrzeuges eingegeben wird,
c) ein Abgleich der Daten der programmierten Version mit den aktuellen Daten während der ersten und/oder der folgenden Fahrstrecke und Wendemanöver erfolgt, die Daten erforderlichenfalls korrigiert und die Abweichungen und Änderungen angezeigt werden
d) die geänderten aktualisierten Daten über die Funkschnittstelle in den fahrzeugunabhängigen Servercomputer eingegeben werden, dabei die Simulation erneut erfolgt.
e) und mittels ständigem Datenaustausch das Fahrmanagement das Fahrzeug und des oder der Anbaugeräte automatisch optimiert und gesteuert wird.

8. Steuerprogramm für ein Fahrzeug, nach einem der vorstehenden Ansprüche,
**dadurch gekennzeichnet,**
**dass** im Rahmen des Fahrmanagements auf dem Fahrzeug Daten gesammelt und Anbaugeräte überwacht werden, diese Daten im Bordcomputer oder im Servercomputer gespeichert und ausgewertet werden, so dass eine Fernwartung oder eine Fernüberwachung eines oder mehrerer Anbaugeräte oder des gesamten Fahrzeuges einschließlich seiner Fahrstrecke und seines aktuellen Aufenthaltsortes auf Einzelabfrage oder automatisch erfolgt.

9. Steuerprogramm für ein Fahrzeug, nach einem der vorstehenden Ansprüche,
**dadurch gekennzeichnet,**
**dass** über das Steuerprogramm und eine zugehörige Hardware mit dem Fahrzeug eine interaktive Kommunikation über funkgestützte Daten- oder Kommunikationsnetze erfolgt.
